# DEMANDE DE BREVET EUROPEEN

(11) **EP 1 174 304 A1**
(43) Date de publication de la demande: **23.01.2002**
(21) Numéro de dépôt: 01401912.9
(22) Date de dépôt: 17.07.2001
(51) Int. Cl.: B60L 15/20, B60L 11/14

(54) **Dispositif de transmission électronique de couple sans batterie de puissance**

(30) Priorité: 19.07.2000 FR 0009461
(71) Demandeur: Peugeot Citroen Automobiles SA, 92200 Neuilly sur Seine (FR)
(72) Inventeur: Laeuffer, Jacques, 75116 Paris (FR)
(74) Mandataire: Texier, Christian

(57) **Abrégé**

L'invention concerne un dispositif de transmission de puissance entre le moteur thermique (10) et les roues (80) d'un véhicule automobile, comprenant deux machines électriques (20, 30), un ensemble mécanique (40) reliant le moteur thermique et les deux machines électriques, un dispositif de liaison (50) assurant le passage de puissance électrique entre les deux machines électriques et un dispositif de contrôle (70) pour commander le dispositif de liaison et piloter la dérivation de puissance depuis le moteur thermique vers les machines électriques, caractérisé en ce que le dispositif de liaison (50) assure un passage direct de puissance entre les deux machines électriques, sans élément intermédiaire de stockage ou de déstockage d'énergie important, et en ce que le dispositif de contrôle (70) commande le dispositif de liaison pour que la puissance générée par une machine électrique soit immédiatement consommée par l'autre et pour que les machines électriques répondent aux besoins de la chaîne de traction.

## Description

L'invention concerne un dispositif de transmission pour un véhicule automobile, destiné à assurer la transmission de puissance entre le moteur thermique et les roues du véhicule, en utilisant des machines électriques.

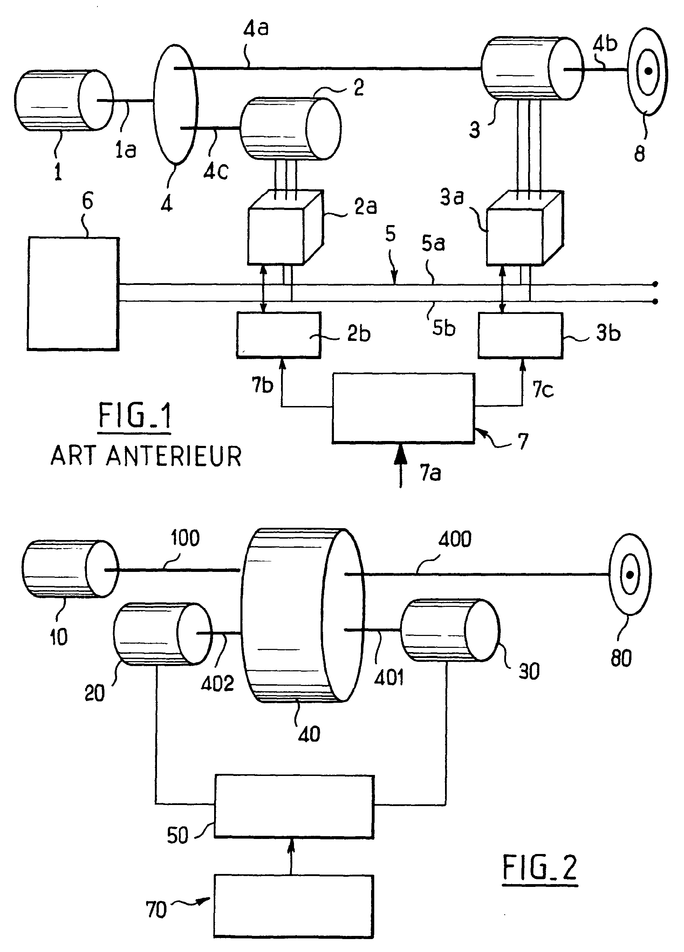

On connaît déjà un dispositif de transmission pour un véhicule automobile qui est schématiquement illustré à la figure 1.

Ce véhicule comporte un moteur thermique 1, et deux machines électriques 2 et 3.

Le moteur thermique 1 et les deux machines électriques 2 et 3 sont reliés entre eux par l'intermédiaire d'un train épicycloïdal 4.

Ainsi, le moteur thermique 1, la machine électrique variateur 2, respectivement la machine électrique de traction 3 sont reliés au train 4 par l'intermédiaire de l'arbre 1a, de l'arbre 4c, respectivement de l'arbre 4a.

A la machine électrique variateur 2 est associé un onduleur 2a, tandis qu'un onduleur 3a est associé à la machine électrique de traction 3.

Les alimentations continues des deux onduleurs 2a et 3a sont reliées entre elles par l'intermédiaire d'un bus haute tension 5.

Ce bus 5 est également relié à une batterie de puissance haute tension 6.

Un dispositif de commande 2b, respectivement 3b est associé à chaque onduleur 2a, respectivement 3a.

Enfin, un dispositif de contrôle 7 est prévu pour contrôler les deux dispositifs de commande 2b, 3b, en fonction des besoins de la chaîne de traction.

La flèche référencée 7a symbolise un signal d'entrée du dispositif de contrôle 7, signal représentatif des besoins de la chaîne de traction, correspondant par exemple au degré d'enfoncement de la pédale d'accélérateur.

Les flèches 7b et 7c symbolisent des signaux de sortie du dispositif de contrôle 7 qui servent à piloter les dispositifs de commande 2b et 3b des onduleurs 2a et 3a.

Lorsque le moteur thermique fonctionne, une partie de sa puissance est transmise directement et de façon mécanique aux roues 8 du véhicule, par l'intermédiaire de l'arbre 1a, du train 4, de l'arbre 4a et de l'arbre 4b reliant la machine électrique de traction 3 aux roues 8, tandis qu'une autre partie est "dérivée" par la chaîne électrique formée des deux machines électriques 2 et 3 et des deux onduleurs 2a et 3b.

Cette technique de "dérivation de puissance" permet de moduler la puissance transmise aux roues.

Ainsi, la puissance transmise depuis le moteur thermique 1 à la machine électrique variateur 2 peut être ensuite transmise à la batterie à haute tension 6 ou à la machine électrique de traction 3, suivant un algorithme prédéterminé qui dépend par exemple du style de conduite et qui est mis en oeuvre par le dispositif de contrôle.

Par ailleurs, dans une phase de ralentissement, la machine électrique de traction est entraînée par les roues 8 du véhicule. Elle se comporte alors en générateur et peut également transmettre de la puissance vers la batterie 6.

Ce type d'architecture permet d'éviter la présence d'une boîte de vitesses mécanique ou automatique et elle assure un bon confort de conduite puisqu'elle évite les à-coups dans le sens de la marche.

L'inconvénient majeur de cette structure est la présence de la batterie à haute tension 6.

Cet élément a un coût important par rapport au coût global du véhicule.

Elle comporte également des risques pour les personnes, lors d'une intervention d'entretien ou lors d'un accident.

Des moyens de protection doivent donc être prévus pour protéger les personnes contre un choc électrique ou encore éviter une décharge incontrôlée de la batterie lors d'un court-circuit accidentel.

Il convient donc de prévoir des contacteurs et des fusibles de puissance ainsi que des câbles haute tension blindés.

Ceci constitue également un surcoût.

Par ailleurs, la tension en sortie de la batterie 6 n'est pas constante. Elle peut notamment varier entre 240 et 400 volts.

Pour supporter ces hautes tensions ainsi que des variations importantes, les onduleurs doivent être conçus de façon appropriée et leur taille et leur coût sont relativement importants.

Ainsi, la présence d'une batterie de puissance haute tension entraîne des problèmes de sécurité pour les personnes et des surcoûts importants pour le véhicule.

L'invention a pour objet de pallier ces inconvénients, tout en conservant un bon confort de conduite, sans à-coups, et un bon rendement.

La solution apportée par l'invention consiste à supprimer la batterie de puissance, le dispositif de transmission étant contrôlé de façon spécifique.

Ainsi, l'invention concerne un dispositif de transmission de puissance entre le moteur thermique et les roues d'un véhicule automobile, comprenant deux machines électriques, un ensemble mécanique reliant le moteur thermique et les deux machines électriques, un dispositif de liaison assurant le passage de puissance électrique entre les deux machines électriques et un dispositif de contrôle pour commander le dispositif de liaison et piloter la dérivation de puissance depuis le moteur thermique vers les machines électriques, caractérisé en ce que le dispositif de liaison assure un passage direct de puissance entre les deux machines électriques, sans élément intermédiaire de stockage ou de déstockage d'énergie important, et en ce que le dispositif de contrôle commande le dispositif de liaison pour que la puissance générée par une machine électrique soit immédiatement consommée par l'autre et pour que les machines électriques répondent aux besoins de la chaîne de traction.

Dans la présente description et dans les revendications qui suivent, l'expression "stockage (ou déstockage) important d'énergie" désignera un stockage (ou déstockage) permis par un élément tel qu'une batterie tandis que l'expression "petit stockage (ou déstockage) d'énergie" désignera un stockage (ou déstockage) permis par un élément tel qu'un condensateur.

Dans un mode particulier de réalisation, le dispositif de liaison entre les deux machines électriques comprend deux convertisseurs statiques d'énergie reliés entre eux, chacun d'eux étant associé à une machine électrique, le dispositif de contrôle agissant sur un premier convertisseur pour que la puissance électrique générée par un convertisseur soit immédiatement consommée par l'autre et sur un deuxième convertisseur en fonction des besoins de la chaîne de traction.

De façon préférée, les alimentations continues des deux convertisseurs sont reliées par l'intermédiaire d'un bus haute tension et un signal représentatif de la tension mesurée entre les deux lignes du bus est utilisé pour le contrôle du premier convertisseur.

De façon préférée, le signal représentatif de la tension sur le bus constitue une première entrée du dispositif de contrôle, ce dispositif comportant un comparateur pour comparer ce signal à un signal de référence, le signal de sortie du comparateur étant transmis à un moyen de correction, du type filtre passe bas, dont le signal de sortie est transmis à un moyen de commande du premier convertisseur, dont la sortie constitue la première sortie du dispositif de contrôle.

Egalement de façon préférée, un signal représentatif des besoins de la chaîne de traction constitue une deuxième entrée du dispositif de contrôle, ce dispositif comprenant un moyen de traitement, dont le signal de sortie est transmis à un moyen de commande du deuxième convertisseur, dont la sortie constitue la deuxième sortie du dispositif de contrôle.

Le signal représentatif des besoins de la chaîne de traction est fonction par exemple du degré d'enfoncement de la pédale d'accélérateur.

Dans un exemple préféré de réalisation, l'ensemble mécanique reliant le moteur thermique et les deux machines électriques est un train épicycloïdal.

Le dispositif de transmission selon l'invention, comporte, de façon préférée, au moins un condensateur entre les deux lignes du bus.

Il peut également comporter une batterie reliée au bus par un dispositif intermédiaire, cette batterie étant destinée à alimenter au moins une machine électrique pour assurer le démarrage du moteur thermique.

De préférence, ce dispositif intermédiaire comprend au moins une diode disposée de manière à autoriser le flux de puissance de la batterie vers le bus.

Selon un mode avantageux de réalisation, le dispositif intermédiaire comprend deux diodes dont chacune est interposée entre la batterie et l'une des lignes du bus, ces deux diodes étant disposées de manière à autoriser le flux de puissance de la batterie vers le bus, permettant ainsi d'assurer la sécurité d'une personne se trouvant accidentellement en contact avec l'une des lignes du bus.

De façon préférée, la tension de ladite batterie est fixée à 42 volts, permettant ainsi d'assurer l'alimentation du réseau de bord de 42 volts.

Enfin, le dispositif de transmission selon l'invention comporte avantageusement un convertisseur haute tension - basse tension connecté sur le bus, pour alimenter ou charger les auxiliaires présents sur le véhicule.

L'invention concerne encore un véhicule automobile équipé d'un dispositif de transmission tel que décrit précédemment.

L'invention sera mieux comprise et d'autres buts, avantages et caractéristiques de celle-ci apparaîtront plus clairement à la lecture de la description qui suit et qui est faite en référence aux figures 2 à 4 annexées sur lesquelles:
- La figure 2 montre un exemple de dispositif de transmission selon l'invention, le moteur thermique et les deux machines électriques étant reliés par un ensemble mécanique quelconque,
- La figure 3 représente un dispositif de transmission similaire à celui de la figure 2, dans lequel l'ensemble mécanique est un train épicycloïdal et
- La figure 4 représente un mode de réalisation particulier du dispositif de transmission selon l'invention, dans lequel une machine électrique peut fonctionner en tant que démarreur du moteur thermique.

Le dispositif de transmission selon l'invention, illustré à la figure 2, est conçu pour un véhicule automobile comportant un moteur thermique 10.

Le dispositif de transmission comprend deux machines électriques en parallèle 20 et 30.

Le moteur thermique 10 et les machines électriques 20 et 30 sont reliés entre eux par un ensemble mécanique 40.

De façon plus précise, l'arbre 100 relie le moteur thermique 10 à l'ensemble mécanique 40, l'arbre 402 relie la machine électrique variateur 20 à l'ensemble mécanique 40 et l'arbre 401 relie la machine électrique de traction 30 à ce même ensemble mécanique 40.

La liaison entre l'ensemble mécanique 40 et les roues 80 est assurée par l'arbre 400.

Les deux machines électriques 20 et 30 sont reliées entre elles par un dispositif de liaison 50, lequel est commandé par un dispositif de contrôle 70.

Lorsque le moteur thermique 10 fonctionne, la puissance qu'il génère est transmise à l'ensemble mécanique 40 par l'intermédiaire de l'arbre 100. Une partie de cette puissance est transmise directement aux roues 80, par l'intermédiaire de l'arbre 400, tandis qu'une autre partie de cette puissance est dérivée par la chaîne électrique formée par les deux machines électriques 20 et 30, le dispositif de liaison 50 et le dispositif de contrôle 70.

La caractéristique essentielle du dispositif de liaison 50 est qu'il assure le passage de puissance électrique entre les machines électriques 20 et 30, après adaptation éventuelle, et ceci sans nécessiter d'élément intermédiaire de stockage d'énergie important, comme la batterie de puissance 6 illustrée à la figure 1.

Dans la mesure où le dispositif de liaison ne comporte pas d'élément de stockage ou de déstockage important d'énergie, le dispositif de contrôle 70 est conçu pour commander le dispositif de liaison 50 pour que, d'une part, la puissance générée par une machine électrique soit immédiatement consommée par l'autre et pour que, d'autre part, les machines électriques répondent aux besoins de la chaîne de traction.

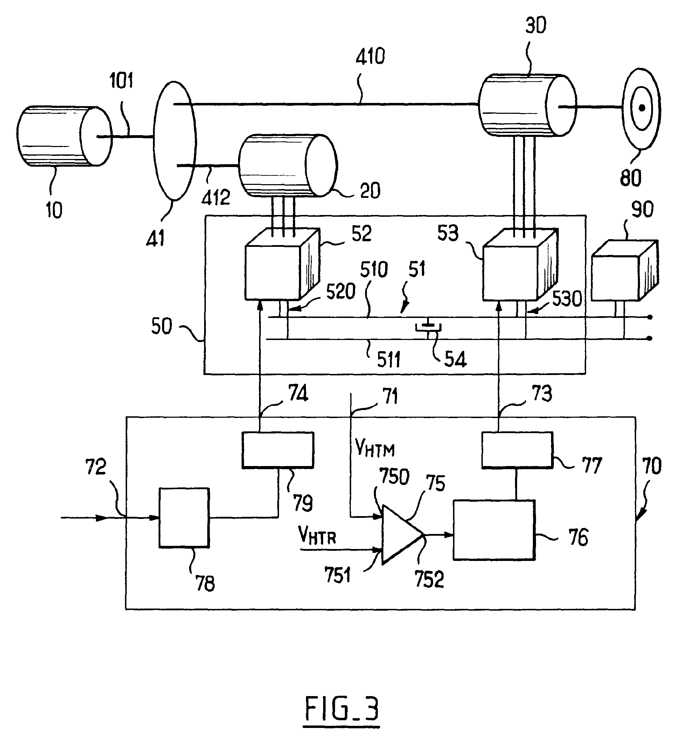

Un exemple de réalisation du dispositif de transmission selon l'invention va maintenant être décrit en référence à la figure 3.

Dans cet exemple, l'ensemble mécanique qui relie entre eux le moteur thermique et les deux machines électriques est constitué par un train épicycloïdal 41.

Tous les éléments identiques à ceux décrits pour le dispositif de transmission illustré à la figure 2 portent les mêmes références.

Ainsi, le moteur thermique 10 est relié au train épicycloïdal 41 par l'intermédiaire de l'arbre 101 et la puissance générée par le moteur thermique 10 est transmise, par l'intermédiaire du train 41, d'une part directement aux roues 80 par l'intermédiaire de l'arbre 410 et, d'autre part, à la machine électrique variateur 20 par l'intermédiaire de l'arbre 412, cette puissance étant communiquée à la machine électrique de traction 30, reliée aux roues par l'arbre 411, par l'intermédiaire du dispositif de transmission comprenant le dispositif de liaison 50 et le dispositif de contrôle 70 qui vont maintenant être décrits en détail.

Dans l'exemple de réalisation selon la figure 3, le dispositif de liaison 50 comporte deux convertisseurs statiques d'énergie qui se présentent sous la forme de deux onduleurs 52, 53, chacun d'eux étant associé à une machine électrique 20, 30.

De plus, les deux onduleurs 52 et 53 sont reliés entre eux, par l'intermédiaire de leurs alimentations continues 520 et 530, lesquelles sont reliées à un bus 51 dont les deux lignes portent les références 510 et 511.

Comme le montre la figure 3, le dispositif de liaison ne comporte aucune batterie de puissance.

Ainsi, la somme des deux puissances électriques continues des deux onduleurs 52 et 53 doit être nulle ou encore, toute puissance électrique générée par un des onduleurs et fournie au bus 51 doit être immédiatement consommée par l'autre onduleur.

Ceci se traduit par le fait que la tension sur le bus, ou encore entre les deux lignes 510 et 511 du bus, doit être maintenue à une valeur constante.

Pour remplir cette condition, le dispositif de transmission selon l'invention comporte un dispositif de contrôle spécifique qui va maintenant être décrit.

Ce dispositif de contrôle 70 comporte deux entrées 71 et 72 et deux sorties 73 et 74.

La première sortie 73 du dispositif de contrôle 70 est reliée à l'onduleur 53 associé à la machine électrique 30 de traction.

La deuxième sortie 74 du dispositif de contrôle 70 est, quant à elle, reliée à l'onduleur 52 associé à la machine électrique variateur 20.

Le dispositif de transmission selon l'invention comporte des moyens de mesure de la tension entre les deux lignes 510 et 511 du bus (non illustrés sur la figure 3).

Grâce à ces moyens de mesure, un signal représentatif de la tension sur le bus (V_{HTM}) est transmis au dispositif de contrôle 70, sur son entrée 71.

Le dispositif de contrôle 70 comporte également un comparateur 75 dont la première entrée 750 est reliée à la première entrée 71 du dispositif de contrôle et dont la deuxième entrée 751 reçoit un signal de référence V_{HTR}.

Le comparateur 75 délivre alors un signal sur sa sortie 752 qui est transmis à un moyen de traitement 76, dont le signal de sortie est transmis à un dispositif de commande 77 de l'onduleur 53.

Ainsi, dans cet exemple de réalisation, le dispositif de contrôle 70 permet de piloter l'onduleur 53 associé à la machine électrique 30 de traction, dans le but de maintenir constante la tension sur le bus 50.

En pratique, si la valeur mesurée de la tension sur le bus (V_{HTM}) est supérieure à la valeur de référence (V_{HTR}), la commande de l'onduleur 53 dépend du mode de fonctionnement de la machine électrique 30 de traction:
- Si la machine électrique de traction 30 est en mode moteur, l'onduleur 53 est commandé par le dispositif de contrôle 70 de façon à convertir davantage d'énergie électrique en énergie mécanique,
- et si la machine électrique de traction 30 est en mode générateur, l'onduleur 53 est commandé de façon à convertir moins d'énergie mécanique en énergie électrique.

Bien entendu, si la valeur de V_{HTM} est inférieure à la valeur de référence V_{HTR}, l'onduleur 53 est commandé en sens inverse.

Par ailleurs, l'onduleur 52 associé à la machine électrique variateur 20 est commandé, par le dispositif de contrôle 70, en fonction des besoins de la chaîne de traction.

Dans l'exemple illustré à la figure 3, le dispositif de contrôle 70 reçoit, sur sa deuxième entrée 72, un signal représentatif des besoins de la chaîne de traction.

Ce signal peut notamment être fonction du degré d'enfoncement de la pédale d'accélérateur du véhicule.

Ce signal est transmis depuis l'entrée 72 à un moyen de traitement 78 dont la sortie est reliée à un dispositif de commande 79. Celui-ci commande l'onduleur 52 associé à la machine électrique variateur 20, en fonction des besoins de la chaîne de traction, par le signal transmis sur la sortie 74 du dispositif de contrôle 70.

L'invention n'est pas limitée à ce mode de réalisation et les connexions entre les sorties 73 et 74 du dispositif de contrôle 70 et les onduleurs 52 et 53 du dispositif de liaison pourraient être inversées, de façon à ce que l'onduleur 53 associé à la machine électrique 30 de traction soit commandé en fonction des besoins de la chaîne de traction, l'onduleur 52 associé à la machine électrique variateur 20 étant alors commandé de façon à maintenir constante la tension sur le bus 51.

Ainsi, le dispositif de transmission selon l'invention, grâce à un dispositif de contrôle spécifique, permet d'éviter la présence d'une batterie de puissance haute tension.

Ceci réduit donc le coût global de la transmission, la suppression de la batterie de puissance évitant également le blindage des câbles haute tension ainsi que la présence de contacteurs et de fusibles de puissance.

Par ailleurs, la tension sur le bus étant maintenue constante, par exemple de l'ordre de 400 volts, la taille et le coût des onduleurs sont fortement réduits. L'augmentation de la valeur de la haute tension continue contribue également à cette réduction de la taille et du coût des onduleurs de puissance.

Par ailleurs, ce dispositif de transmission assure la continuité du couple transmis à la roue, la vitesse variant sans changement de rapports. L'évolution du couple transmis à la roue est très rapide et continue grâce à des commandes adaptées des machines électriques.

Par ailleurs, en termes de consommation, un mode opératoire économique peut être obtenu en pilotant le moteur thermique pour qu'il se place à son point de fonctionnement optimal.

Enfin, ce dispositif de transmission permet de bénéficier du frein moteur jusqu'à l'arrêt complet du véhicule. Ainsi, si le ralentissement demandé n'est pas brutal, le véhicule peut être arrêté complètement sans serrer les freins mécaniques, ce qui permet d'éviter tout à-coup.

De préférence, au moins un condensateur 54 est relié entre les deux lignes 510 et 511 du bus 51, pour assurer un petit stockage d'énergie entre les deux onduleurs, nécessaire à leur fonctionnement.

Par ailleurs, un convertisseur haute tension - basse tension 90 est avantageusement relié au bus 51.

Ce convertisseur permet, à partir de la haute tension continue, d'alimenter des auxiliaires prévus sur le véhicule.

On va maintenant s'intéresser au démarrage du moteur thermique.

Classiquement, on utilise un démarreur.

Selon l'invention, le démarrage du moteur thermique est réalisé par l'intermédiaire d'une des machines électriques. Le démarreur est donc supprimé.

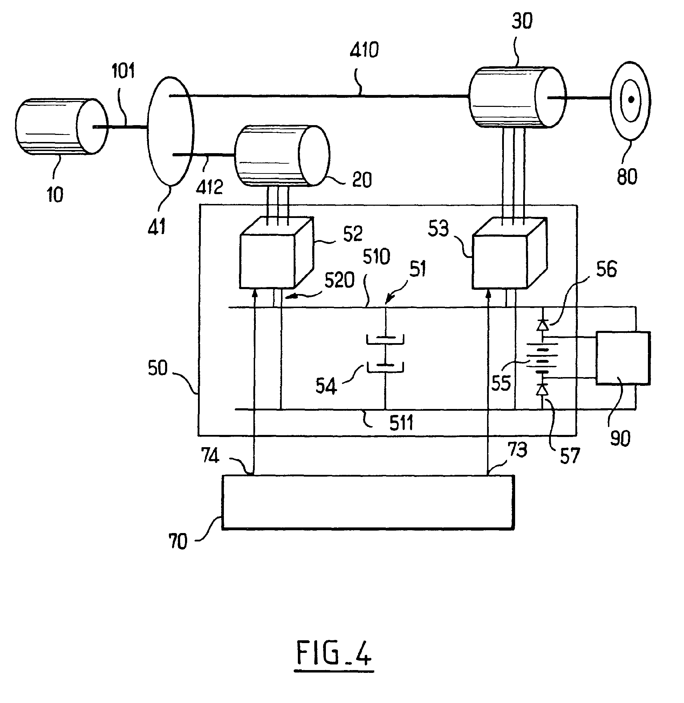

Les moyens permettant d'assurer le démarrage du moteur thermique par le pilotage d'une machine électrique sont illustrés à la figure 4.

Cette figure 4 illustre des éléments qui ont déjà été décrits en détail en référence à la figure 3 et ne seront pas de nouveau décrits.

Les moyens permettant d'assurer le démarrage du moteur thermique comprennent une batterie de servitude 55 reliée entre les deux lignes 510 et 511 du bus 51, par l'intermédiaire d'un montage à diodes 56 et 57.

Cette batterie 55 est par ailleurs reliée au convertisseur haute tension - basse tension 90, lequel assure son chargement.

Le démarrage du moteur thermique 10 est enclenché lorsqu'a été détectée, par des moyens appropriés, la volonté du conducteur de mettre le véhicule en marche.

Le dispositif de contrôle 70 commande alors au moins un des deux onduleurs 52 ou 53.

Ainsi, si l'onduleur 52 est rendu conducteur, du fait de sa liaison à la batterie 55, il assure l'alimentation de la machine électrique variateur 20.

Cette machine électrique variateur 20 apporte ainsi de la puissance au moteur thermique 10, par l'intermédiaire de l'ensemble mécanique 40 ou du train épicycloïdal 41.

La tension de la batterie 55 est très faible par rapport à la haute tension sous laquelle la machine électrique variateur fonctionne en roulage. Cette tension qui est d'environ 12 volts ou 42 volts, est cependant suffisante pour lancer le moteur thermique 10, à environ 125 à 200 tours par minute. Après le démarrage du moteur thermique 10, les diodes 56 et 57 isolent la batterie 55 de la haute tension présente sur le bus 51.

Lors de la phase d'arrêt, des moyens appropriés détectent la volonté du conducteur de mettre le véhicule hors fonctionnement. Une commande appropriée permet alors d'arrêter le moteur thermique et les deux machines électriques.

A ce moment, la tension sur le bus 51 est encore une haute tension, de l'ordre de 400 volts.

Le ou les condensateurs 54 se déchargent et la tension à leurs bornes baisse. Les diodes 56 et 57 isolent la batterie 55 tant que la tension à ses bornes n'atteint pas un niveau beaucoup plus faible, fixé par exemple à 12 ou 42 volts.

Le démarrage du véhicule peut alors de nouveau être enclenché, comme expliqué plus haut.

On notera qu'il pourrait n'y avoir qu'une seule diode telle que 56 ou 57 interposée entre la batterie 55 et le bus, pourvu qu'elle soit disposée de manière à autoriser le flux de puissance de la batterie vers le bus. Cependant, la sécurité est accrue dans le cas où il y en a deux: en effet, si une personne se trouve accidentellement en contact d'une part avec l'une des lignes du bus et d'autre part avec la caisse du véhicule (c'est-à-dire la masse de celui-ci), elle ne risque pas de s'électrocuter car l'une des liaisons entre le convertisseur 90 et la batterie 55 est elle-même reliée à la masse (comme cela est traditionnel dans les batteries de véhicules automobiles) et la diode correspondante empêche le passage du courant.

Enfin, la batterie 55 peut avantageusement être utilisée pour alimenter le réseau 12 volts ou 42 volts du véhicule suivant que sa tension est fixée à 12 volts ou 42 volts.

Les signes de référence insérés après les caractéristiques techniques figurant dans les revendications ont pour seul but de faciliter la compréhension de ces dernières et ne sauraient en limiter la portée.

## Revendications

1. Dispositif de transmission de puissance entre le moteur thermique (10) et les roues (80) d'un véhicule automobile, comprenant deux machines électriques (20, 30), un ensemble mécanique (40, 41) reliant le moteur thermique et les deux machines électriques, un dispositif de liaison (50) assurant le passage de puissance électrique entre les deux machines électriques et un dispositif de contrôle (70) pour commander le dispositif de liaison et piloter la dérivation de puissance depuis le moteur thermique vers les machines électriques, **caractérisé en ce que** le dispositif de liaison (50) assure un passage direct de puissance entre les deux machines électriques, sans élément intermédiaire de stockage ou de déstockage d'énergie important, et **en ce que** le dispositif de contrôle (70) commande le dispositif de liaison pour que la puissance générée par une machine électrique soit immédiatement consommée par l'autre et pour que les machines électriques répondent aux besoins de la chaîne de traction.

2. Dispositif de transmission selon la revendication 1, **caractérisé en ce que** le dispositif de liaison (50) entre les deux machines électriques comprend deux convertisseurs statiques d'énergie (52, 53) reliés entre eux, chacun d'eux étant associé à une machine électrique (20, 30), le dispositif de contrôle (70) agissant sur un premier convertisseur pour que la puissance électrique générée par un convertisseur soit immédiatement consommée par l'autre et sur un deuxième convertisseur en fonction des besoins de la chaîne de traction.

3. Dispositif de transmission selon la revendication 2, **caractérisé en ce que** les alimentations continues (520, 530) des deux convertisseurs (52, 53) sont reliées par l'intermédiaire d'un bus (51) haute tension et **en ce qu'**un signal représentatif de la tension mesurée entre les deux lignes du bus est utilisée pour le contrôle du premier convertisseur.

4. Dispositif de transmission selon la revendication 3, **caractérisé en ce que** le signal représentatif de la tension sur le bus constitue une première entrée (71) du dispositif de contrôle (70), ce dispositif comportant un comparateur (75) pour comparer ce signal à un signal de référence, le signal de sortie du comparateur (75) étant transmis à un moyen de correction (76), du type filtre passe bas, dont le signal de sortie est transmis à un moyen de commande (77) du premier convertisseur (53), dont la sortie constitue la première sortie (73) du dispositif de contrôle.

5. Dispositif de transmission selon l'une des revendications 2 à 4, **caractérisé en ce qu'**un signal représentatif des besoins de la chaîne de traction constitue une deuxième entrée (72) du dispositif de contrôle (70), ce dispositif comprenant un moyen de traitement (78) dont le signal de sortie est transmis à un moyen de commande (79) du deuxième convertisseur (52), dont la sortie constitue la deuxième sortie (74) du dispositif de contrôle.

6. Dispositif de transmission selon la revendication 5, **caractérisé en ce que** le signal représentatif des besoins de la chaîne de traction est fonction du degré d'enfoncement de la pédale d'accélérateur.

7. Dispositif de transmission selon l'une des revendications 1 à 6, **caractérisé en ce que** l'ensemble mécanique reliant le moteur thermique (10) et les deux machines électriques (20, 30) est un train épicycloïdal (41).

8. Dispositif de transmission selon l'une des revendications 3 à 7, **caractérisé en ce que** le dispositif de liaison (50) comporte au moins un condensateur (54) entre les deux lignes (510, 511) du bus (51).

9. Dispositif de transmission selon l'une des revendications 3 à 8, **caractérisé en ce que** le dispositif de liaison (50) comporte une batterie (55) reliée au bus (51) par un dispositif intermédiaire, cette batterie étant destinée à assurer le démarrage du moteur thermique, par l'intermédiaire d'au moins une machine électrique (20, 30).

10. Dispositif de transmission selon la revendication 9, **caractérisé en ce que** le dispositif intermédiaire comprend au moins une diode disposée de manière à autoriser le flux de puissance de la batterie vers le bus (51).

11. Dispositif de transmission selon la revendication 10, **caractérisé en ce que** le dispositif intermédiaire comprend deux diodes (56,57) dont chacune est interposée entre la batterie (55) et l'une des lignes du bus, ces deux diodes étant disposées de manière à autoriser le flux de puissance de la batterie (55) vers le bus (51), permettant ainsi d'assurer la sécurité d'une personne se trouvant accidentellement en contact avec l'une des lignes du bus.

12. Dispositif de transmission selon l'une quelconque des revendications 9 à 11, **caractérisé en ce que** la tension de ladite batterie (55) est fixée à 42 volts, permettant ainsi d'assurer l'alimentation du réseau de bord de 42 volts.

13. Dispositif de transmission selon l'une des revendications 3 à 12, **caractérisé en ce qu'**il comporte un convertisseur haute tension - basse tension (90) connecté sur le bus (51), pour alimenter ou charger les auxiliaires présents sur le véhicule.

14. Véhicule automobile équipé d'un dispositif de transmission selon l'une des revendications 1 à 13.
